# EUROPÄISCHE PATENTSCHRIFT

(11) **EP 2 539 265 B1**
(45) Veröffentlichungstag und Bekanntmachung des Hinweises auf die Patenterteilung: **12.02.2014**
(21) Anmeldenummer: 11802894.3
(22) Anmeldetag: 15.12.2011
(51) Int. Cl.: B65H 75/44, A47L 9/26

(54) **BREMSSYSTEM FÜR EINE KABELROLLE**
BRAKE SYSTEM FOR A CABLE REEL
SYSTÈME DE FREINAGE POUR ROULEAU DE CÂBLE

(30) Priorität: 17.12.2010 CN 201020668375 U; 26.08.2011 CN 201110270914
(43) Veröffentlichungstag der Anmeldung: 02.01.2013
(73) Patentinhaber: Athos Holding GmbH, 58515 Lüdenscheid (DE); Taicang Athos Electrical Components Co., Ltd., Taicang, Jiangsu (CN)
(72) Erfinder: STEINMÜLLER, Jörg, 58540 Meinerzhagen (DE); KLEINDOPP, Günter, 58849 Herscheid (DE); GLOMB, Martin, 58332 Schwelm (DE); ZHANG, Lei, Shanghai (CN)
(74) Vertreter: Dörner, Kötter & Kollegen
(86) Internationale Anmeldenummer: PCT/EP2011/072920
(87) Internationale Veröffentlichungsnummer: WO 2012/080401

(56) Entgegenhaltungen:
- EP-A1- 1 714 932
- EP-A2- 0 966 083
- DE-A1-102006 030 587
- FR-A1- 2 764 181

## Beschreibung

Die Erfindung betrifft eine Kabeltrommel zur selbsttätigen Aufwicklung eines Kabels nach dem Oberbegriff des Patentanspruchs 1.

Bei Geräten in Haushalt und Werkstatt, beispielsweise bei Staubsaugern, ist zur Unterbringung von nur zeitweise oder in wechselnder Länge benötigten elektrischen Leitungen eine Kabeltrommel zur selbsttätigen Aufwicklung eines Kabels vorgesehen. Diese Kabeltrommeln sind mit einem Bremssystem versehen, das verhindert, dass ein von der Kabeltrommel abgewickelter Kabelabschnitt unmittelbar wieder selbsttätig aufgewickelt wird. Derartige Bremssysteme lassen sich in zwei Prinzipien unterteilen. Zum einen sind Bremshebelsysteme bekannt, mit denen ein Gummielement mittels Reibung ein ungewolltes selbsttätiges Aufwickeln des Kabels verhindert. Nachteilig bei diesen Systemen ist, dass diese empfindlich gegenüber äußeren Einflüssen, wie beispielsweise hohe Temperaturen oder auch Benetzung mit Fett sind, weshalb diese Systeme fehleranfällig sind. Weiterhin sind Bremseinrichtungen bekannt, bei denen Rastelemente über eine Kulissenbahn gegen einen Anschlag gelenkt werden, um ein ungewolltes selbsttätiges Aufwickeln des Kabels zu verhindern. Nachteilig an diesen Bremssystemen ist, dass bedingt durch die hohen Kräfte der Rückstellfedern beim Aufschlagen des Rastelements Verformungen auftreten können. Aus EP 0 966 083 A2 ist eine Kabeltrommel gemäß dem Oberbegriff des Patentanspruchs 1 bekannt.

Hier will die Erfindung Abhilfe schaffen. Der Erfindung liegt die Aufgabe zugrunde, eine Kabeltrommel zur selbsttätigen Aufwicklung eines Kabels zu schaffen, die ein Bremssystem aufweist, welches zuverlässig ist und bei dem hohe Rückschlagkräfte vermieden sind. Gemäß der Erfindung wird diese Aufgabe durch die Merkmale des kennzeichnenden Teils des Patentanspruchs 1 gelöst.

Mit der Erfindung ist eine Kabeltrommel zur selbsttätigen Aufwickeln eines Kabels geschaffen, welche ein Bremssystem aufweist, das zuverlässig ist und bei dem hohe Rückschlagkräfte vermieden sind. Das in dem Langloch des Bremshebels geführte Bremsrad wird bei Rotation der Kabeltrommel in Aufwickelrichtung gegen die Kulisse gepresst, wodurch eine Abbremsung bewirkt ist. Die Bremskräfte werden dabei deutlich erhöht, sobald das Bremsrad in die Einwölbung der Innenwandung der Kulisse eingreift. An dieser Position erfolgt im Normalfall eine vollständige Abbremsung der Kabeltrommel. In dem Fall, dass der Reibwert zwischen dem vorzugsweise aus Gummi hergestellten Bremsrad und der Kulisse beispielsweise durch eindringende Fette vermindert ist, kann es vorkommen, dass das Bremsrad aus der Einwölbung herausgleitet. In diesem Fall wirkt das an dem Bremshebel nachgelagert angeordnete Blockierelement mit dem an dem inneren Trommeiteil angeordneten Fangteil zusammen, wodurch eine Blockierung der Kabeltrommel bewirkt ist. Diese Blockierung erfolgt aufgrund der vorherigen Abbremsung durch das Bremsrad nur unter geringen Kräften, sodass harte Schläge vermieden sind. Erfindungswesentlich ist die zweistufige Ausbildung des Bremssystems, durch welche die Zuverlässigkeit erhöht ist. Durch das nachgeschaltete Blockierelement ist ein ungewolltes, selbsttätiges Aufwickeln des Kabels ausgeschlossen.

In Weiterbildung der Erfindung weist die Einwölbung einen rechteckförmigen Querschnitt auf. Hierdurch ist die Bremswirkung des Bremsrades erhöht. Alternativ kann die Einwölbung auch einen zumindest bereichsweise sägezahnförmigen Querschnitt aufweisen.

In Ausgestaltung der Erfindung ist das Blockierelement durch eine endseitig an dem Bremshebel angeordnete Abkantung gebildet, wobei das wenigstens eine Fangteil durch einen an einem konzentrisch zur Kulisse an dem inneren Trommelteil angeordneten ringförmigen Steg angeformten Keil gebildet ist. Die Blockierung ist hierbei dadurch bewirkt, dass die Abkantung bei einer Rotation der Kabeltrommel in Aufwickelrichtung an dem Vorsprung des Keils anschlägt.

In weiterer Ausgestaltung der Erfindung ist die Abkantung endseitig mit einem Anschlagteil versehen, das an seiner dem ringförmigen Steg zugewandten Außenseite winklig ausgebildet ist. Hierdurch ist in Abwickelrichtung der Kabeltrommel ein sanftes Hinweggleiten über den Keil erzielt. Bevorzugt weist das Anschlagteil einen trapezförmigen Querschnitt auf.

Vorteilhaft ist ein Bedienhebel angeordnet, über den die Abkantung in Richtung der Mittelachse der Kulisse biegbar ist. Hierdurch ist ein einfaches Lösen der Abkantung aus der Blockierstellung ermöglicht.

In weiterer Ausgestaltung der Erfindung ist das Blockierelement durch einen keilförmig ausgebildeten Schieber gebildet, der eine radiale Anschlagfläche und eine zu dieser Anschlagfläche in einem spitzen Winkel angestellte Gleitfläche aufweist und der an dem Bremshebel verschiebbar gelagert und über eine Feder gegen die Innenwandung der Kulisse vorgespannt ist, wobei die wenigstens eine Einwölbung der Kulisse zugleich ein Fangteil bildet, an deren Seitenwand die Anschlagfläche bei Passieren der Einwölbung in Aufwickelrichtung der Kabeltrommel anschlägt. Hierdurch ist eine Platz sparende Blockiereinrichtung ermöglicht. Ein zusätzlicher konzentrisch zur Kulisse angeordneter ringförmiger Steg ist nicht erforderlich. In dem Fall, dass das Bremsrad aus der Einwölbung hinausgleitet, gleitet der über die Feder gegen die Innenwandung der Kulisse vorgespannte Schieber in die bevorzugt einen rechteckigen Querschnitt aufweisende Einwölbung hinein und schlägt an deren Seitenwand an, wodurch eine selbsttätige Aufwicklung blockiert ist.

Vorteilhaft ist der Schieber mit einem Bedienhebel verbunden, über den er entgegen der Federspannung verschiebbar ist. Hierdurch ist ein einfaches Lösen der Blockierung ermöglicht.

In weiterer Ausgestaltung der Erfindung sind in den Bremshebel zwei Langlöcher zur Aufnahme einer Achse einer Bremsrolle eingebracht, die zueinander zur in Bezug auf die Kulisse radialen Mittelachse symmetrisch ausgebildet sind. Hierdurch ist der Bremshebel in rechts- sowie in linksaufwickelnden Kabeltrommeln gleichermaßen einsetzbar. Je nach Aufwickelrichtung ist die Bremsrolle lediglich in das entsprechende Langloch zu verbringen. Hierzu ist noch ein entsprechend ausgebildeter Schieber einzusetzen, dessen Anschlagfläche entsprechend ausgerichtet ist.

In Weiterbildung der Erfindung weist der Bremshebel wenigstens ein Rastelement auf, über das er mit der Rückenplatte verrastbar ist. Hierdurch ist die Montage des Bremshebels erleichtert.

In weiterer Ausgestaltung der Erfindung weist die Rückenplatte ein hohlzylindrisch ausgebildetes Mittelteil auf, das den Bremshebel aufnimmt und das in die Kulisse hineinragt, wobei seitlich in die Wandung des Mittelsteils eine Aussparung zum Durchtritt des Bremsrades eingebracht ist. Hierdurch ist eine stabile Aufnahme des Bremshebels ermöglicht.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung einer Kabeltrommel mit Bremssystem in Explosionsansicht;

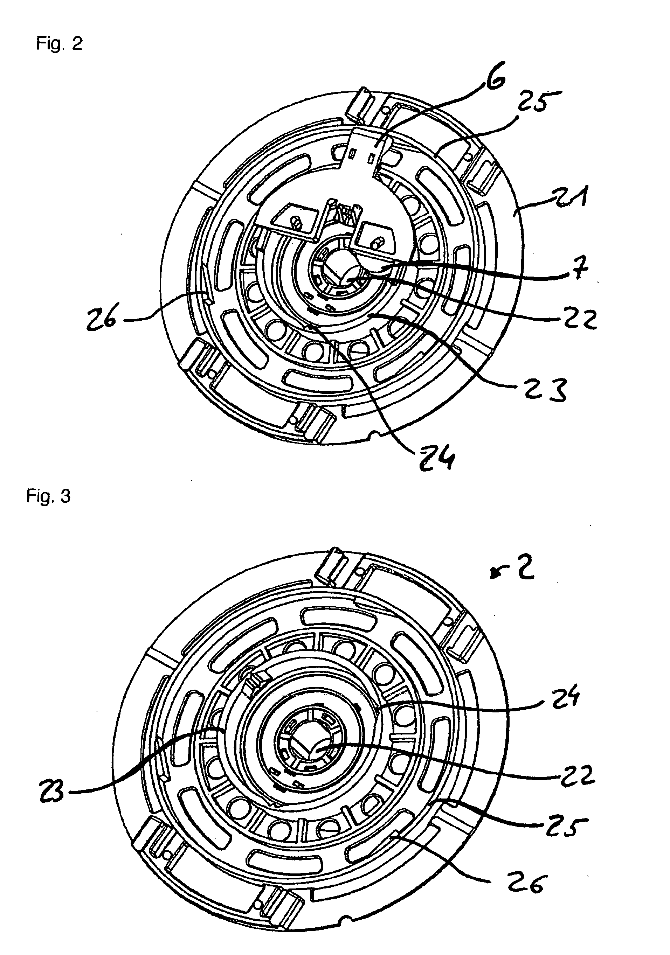

- Figur 2: die Darstellung des inneren Trommelteils der Kabeltrommel aus Figur 1 mit angestellten Bremshebel ohne Rückenplatte;
- Figur 3: die Darstellung des inneren Trommelteils aus Figur 2 ohne Bremshebel;

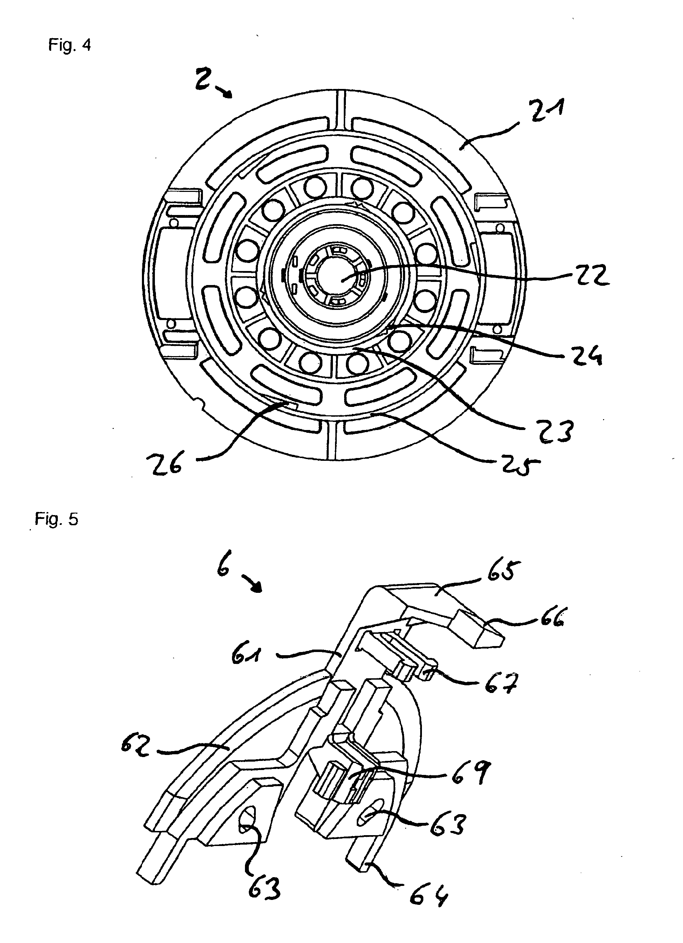

- Figur 4: die Darstellung des inneren Trommelteils aus Figur 3 in der Draufsicht;
- Figur 5: die räumliche Darstellung des Bremshebels der Kabeltrommel aus Figur 1;

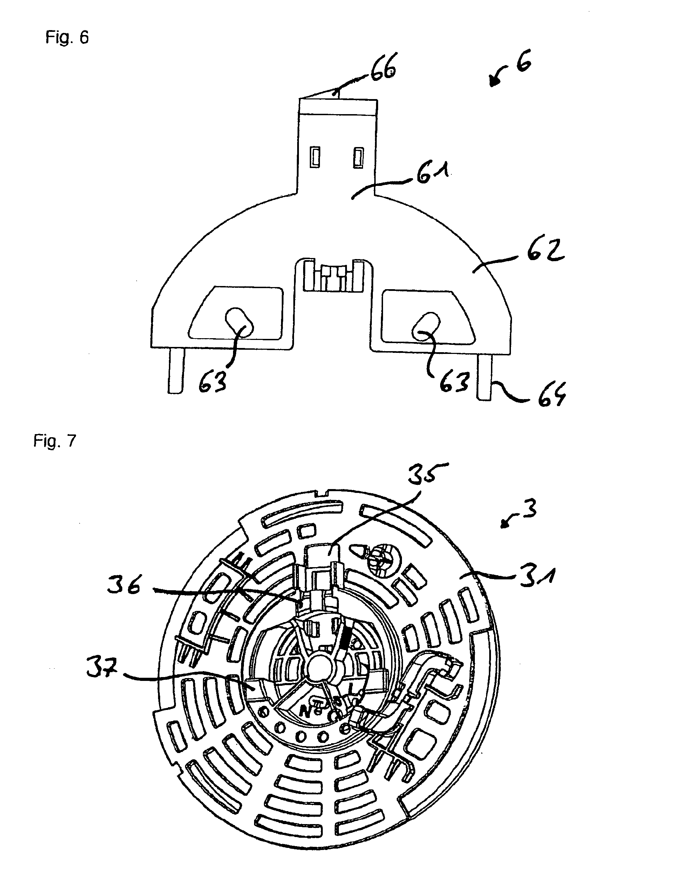

- Figur 6: die Darstellung des Bremshebels aus Figur 5 in der Draufsicht;
- Figur 7: die Darstellung der Rückenplatte der Kabeltrommel aus Figur 1 in der Draufsicht;
- Figur 8: die Darstellung der Rückenplatte aus Figur 7 in der Ansicht von unten;
- Figur 9: die schematische Darstellung einer Kabeltrommel in einer weiteren Ausführungsform;

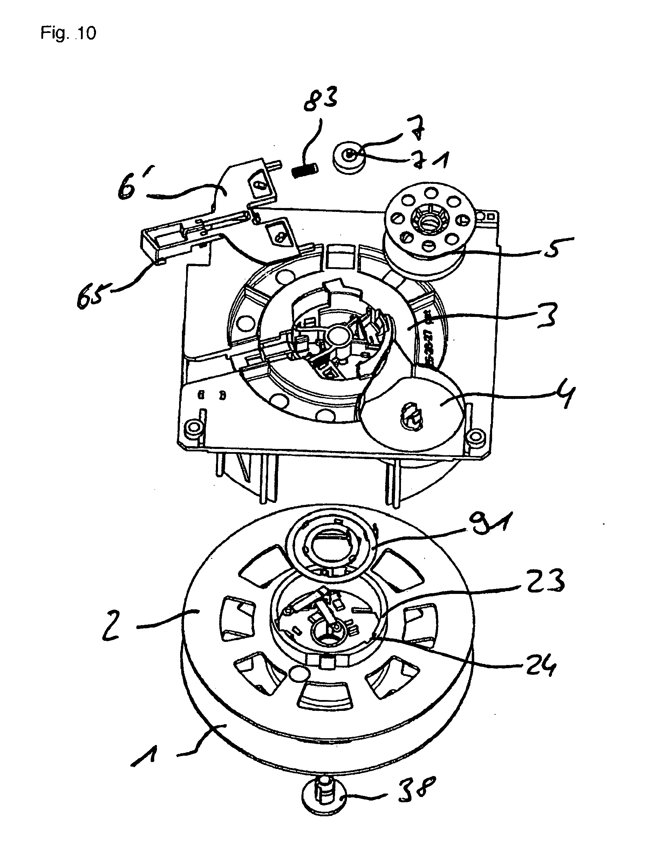

- Figur 10: die Darstellung der Kabeltrommel aus Figur 9 in Explosionsdarstellung;

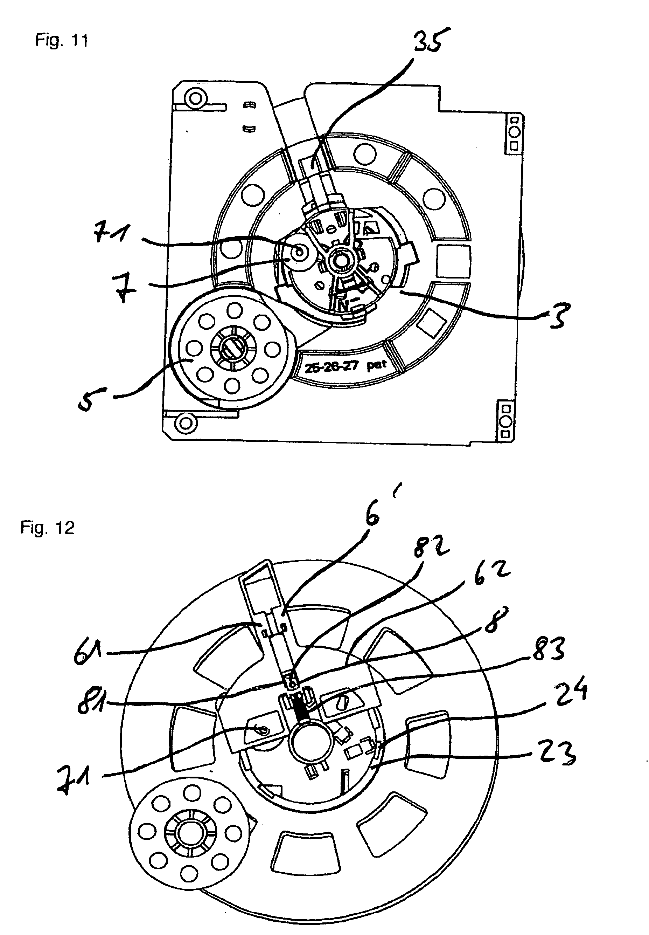

- Figur 11: die Darstellung der Kabeltrommel aus Figur 9 nach Entfernen des Bremshebels;
- Figur 12: die Darstellung der Rückenplatte der Kabeltrommel aus Figur 9 mit eingesetztem Bremshebel und

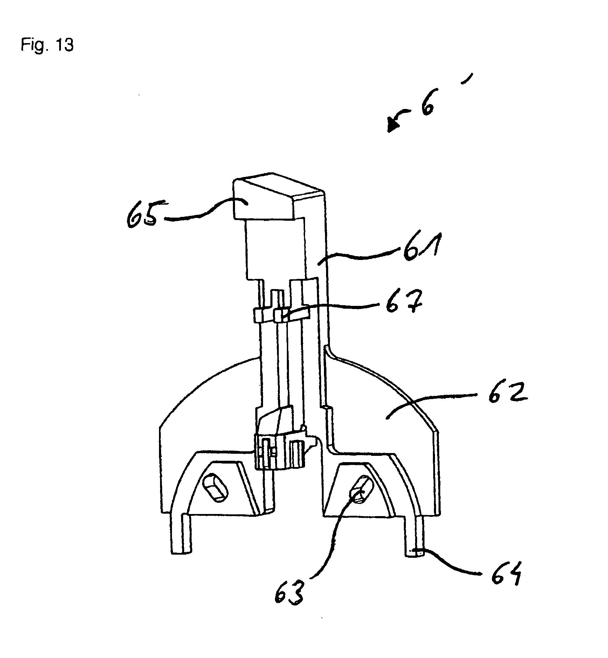

- Figur 13: die räumliche Darstellung des Bremshebels der Anordnung aus Figur 12.

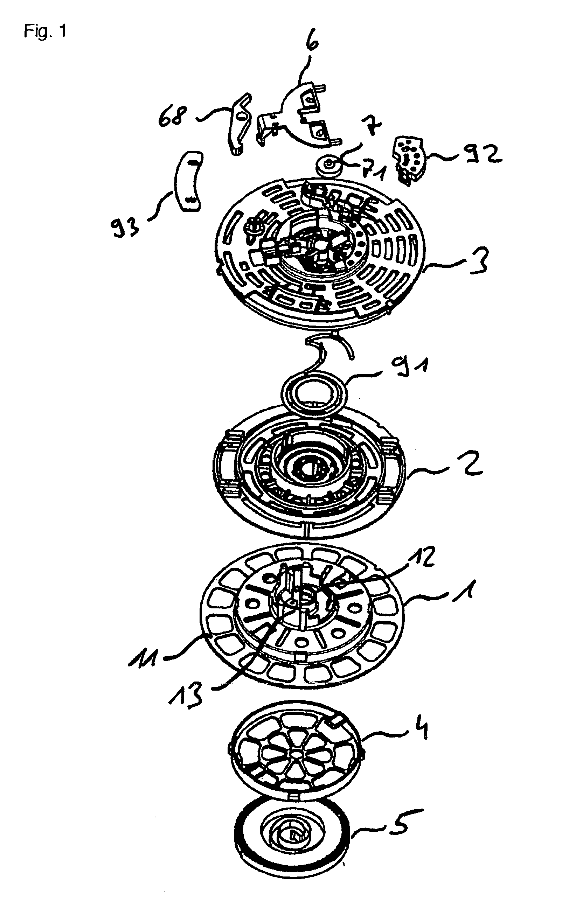

Die als Ausführungsbeispiel gewählte Kabeltrommel gemäß Figur 1 besteht im Wesentlichen aus einem äußeren Trommelteil 1 und einem inneren Trommelteil 2, die über eine Welle 33 mit einer Rückenplatte 3 verbunden sind sowie einer Federaufnahme 4, die eine Feder 5 aufnimmt. Die Feder 5 ist als Torsionsfeder ausgebildet und bewirkt in bekannter Art und Weise ein selbsttätiges Aufwickeln des - nicht dargestellten - Kabels. An der Rückenplatte 3 ist ein Bremshebel 6 angeordnet, der eine Bremsrolle 7 aufnimmt, die in eine Kulisse 23 des inneren Trommelteils 2 eingreift. Weiterhin ist an den Bremshebel 6 eine ein Anschlagteil 66 aufweisende Abkantung 65 angeformt, die an einem an dem inneren Trommelteil 2 angeformten ringförmigen Steg, an dessen Innenwandung Keile 26 angeformt sind, anliegt. In dem inneren Trommelteil 2 sind weiterhin Schleifkontakte 91 im Anschluss eines - nicht dargestellten - aufzuwickelnden Kabels angeordnet. Zum Schutz der Schleifkontakte 21 ist weiterhin auf der Rückenplatte 3 eine Abdeckung 92 angebracht. Die Rückenplatte 3 ist darüber hinaus mit einem Fliehgewicht 93 versehen.

Das äußere Trommelteil ist gebildet durch eine kreisförmige Grundplatte 11, die mittig mit einer Achsaufnahme 12 zur Aufnahme der Welle 33 der Rückenplatte 3 versehen ist. Konzentrisch zur Achsaufnahme 12 sind weiterhin ringförmig Stege 13 angeordnet. Die Stege 13 bilden den Wickelkörper zum Aufwickeln des - nicht dargestellten - Kabels.

Das innere Trommelteil 2 ist gebildet durch eine kreisförmige Grundplatte 21, die mittig mit einer Bohrung 22 zum Durchtritt der Welle 33 der Rückenplatte 3 versehen ist. Konzentrisch zur Bohrung 22 ist auf dem inneren Trommelteil 2 eine hohlzylindrische Kulisse 23 angeformt, die entlang ihrer Innenwandung mit Einwölbungen 24 versehen ist. Im Ausführungsbeispiel sind die Einwölbungen 24 zackenartig ausgeformt, sodass ein sägezahnförmiger Querschnitt gebildet ist. Konzentrisch zur Kulisse 23 ist weiterhin außen um die Kulisse 23 ein ringförmiger Steg 25 an dem inneren Trommelteil 2 angeformt. Entlang seiner Innenwandung sind an den ringförmigen Steg 25 in regelmäßigen Abständen drei Keile 26 angeformt.

Die Rückenplatte 3 ist aus einer kreisförmigen Grundplatte 31 gebildet, an der außen ein umlaufender Rand 311 angeformt ist. Mittig ist an der Rückenplatte 3 ein hohlzylindrisches Mittelteil 32 angeordnet, dass zentrisch eine Welle 33 aufnimmt, welche die Drehachse der durch das äußere Trommelteil 1 und das innere Trommelteil 2 gebildeten Kabeltrommel bildet. Die Welle 33 ist mit einem Verschlussstopfen 38 versehen, der endseitig in die Welle 33 eingebracht ist und der das innere Trommelteil 2 und das äußere Trommelteil 1 auf der Welle 33 fixiert. Seitlich ist in dem hohlzylindrischen Mittelteil 32 eine Ausnehmung 34 zum Durchtritt des an den Bremshebel 6 geführten Bremsrades 7 eingebracht. Beabstandet zum hohlzylindrischen Mittelteil 32 ist in der Grundplatte 31 eine Ausnehmung 35 zum Durchtritt der ein Anschlagteil 66 aufweisenden Abkantung 65 des Bremshebels 6 angeordnet. Weiterhin sind Ausnehmungen 36 zum Eingriff der Rastnasen des Bremshebels 6 sowie Schuhe 37 zur Aufnahme der Haltestege 64 des Bremshebels 6 auf der Rückenplatte 3 angeordnet.

Der Bremshebel 6 ist gebildet durch einen mittelsteg 61, an dessen Längsseiten gegenüberliegend jeweils ein Flügel 62 angeformt ist. Die Flügel 62 erstrecken sich etwa bis zur Hälfte des Mittelstegs 61 und ragen über das Ende des Mittelsteges 61 hinaus. Die Flügel 62 sind jeweils mit einen winklig angestellten Langloch 63 versehen. Dabei sind die Langlöcher 63 derart angeordnet, dass sie spiegelsymmetrisch zur Mittelachse des Mittelstegs 61 sind. Endseitig sind an den Flügeln 62 Haltestege 64 zur Fixierung des Bremshebels 6 an der Rückenplatte 3 angeformt. An seiner den Flügeln 62 gegenüberliegenden Seite ist an dem Bremshebel 6 endseitig eine Abkantung 65 angeformt, welche mit einem Anschlagteil 66 versehen ist. Das Anschlagteil 66 weist im Ausführungsbeispiel einen trapezförmigen Querschnitt auf. Weiterhin sind an dem Mittelsteg 61 Rastelemente 67 zur Befestigung des Bremshebels 6 an der Rückenplatte 3 angeformt.

Der Bremshebel 6 ist über die Rastelemente 67 an der Rückenplatte 3 befestigt, wobei die Haltestege 64 in die Schuhe 37 eingreifen. In einem Langloch 63 des Bremshebels 6 ist ein Bremsrad 7 mit seiner Achse 71 geführt, wobei das Bremsrad 7 durch die Ausnehmung 34 des Mittelteils 33 der Rückenplatte 3 hindurchragt und an der Innenwandung der Kulisse 23 des inneren Trommelteils anliegt. Die Abkantung 65 mit dem an dieser angeformten Anschlagteil 66 ragt dabei durch die Ausnehmung 35 der Rückenplatte 3 hindurch und liegt an der Innenwandung des ringförmigen Steges 25 des inneren Trommelteils an. An der Rückenplatte ist ein Bedienhebel 68 schwenkbar angeordnet, der mit einem Ende an der Abkantung 65 des Bremshebels 6 anliegt. Durch Verschwenken des Bedienhebels ist die Abkantung 65 in Richtung der Mittelachse der Kulisse 3 biegbar.

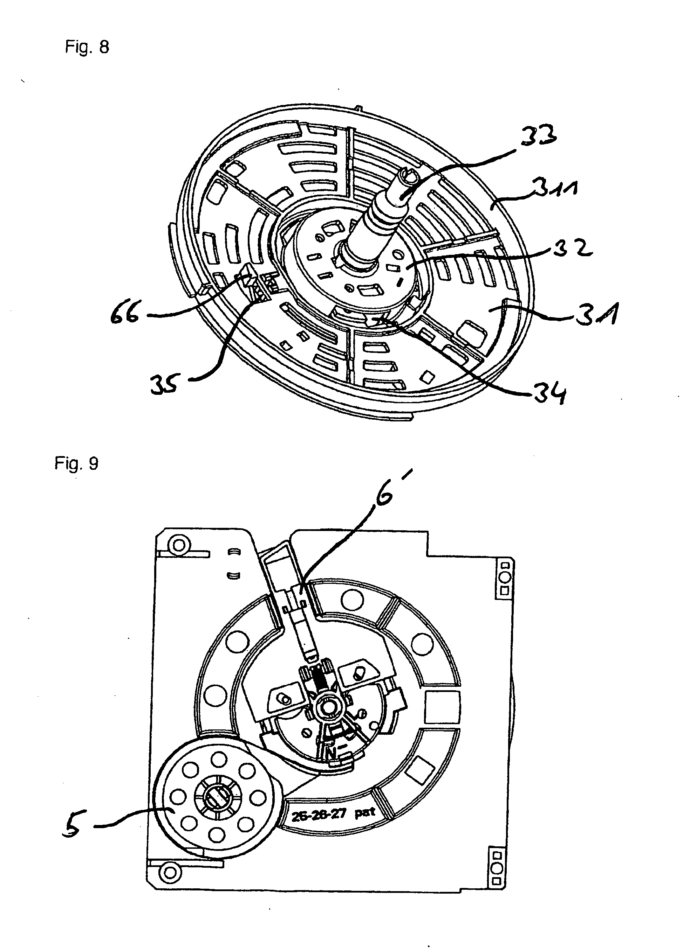

Im Ausführungsbeispiel gemäß Figur 9 weist die Kabeltrommel modifizierte Rückenplatte 3 sowie eine exzentrische Federanordnung auf. Aufgrund der beengten Platzverhältnisse ist an dem inneren Trommelteil 2 kein ringförmiger Steg vorgesehen. Vielmehr ist ein modifizierter Bremshebel 6' angeordnet, in dem ein keilförmig ausgebildeter Schieber 8 verschiebbar gelagert ist. Der Schieber 8 weist eine radiale Anschlagfläche 81 und eine zu dieser Anschlagfläche 81 in einem spitzen Winkel angestellte Gleitfläche 82 auf und ist über eine Feder 83 gegen die Innenwandung der Kulisse 23 des inneren Trommelteils 2 vorgespannt. Die Einwölbungen 24 der Kulisse 23 sind in diesem Ausführungsbeispiel im Wesentlichen rechteckförmig ausgebildet, sodass durch die Seitenwände der Einwölbungen 24 definierte Anschlagflächen gebildet sind, gegen die der Schieber 8 mit seiner Anschlagfläche 31 bei Passieren der Einwölbung 24 in Aufwickelrichtung der Kabeltrommel anschlägt. Der Bremshebel 6' dieser Ausführungsform weist ebenfalls eine Abkantung 65 auf, welche jedoch lediglich der Fixierung des Bremshebels 6' an der Rückenplatte 3 dient. Selbstverständlich ist die Ausführung des Bremssystems nicht auf Kabeltrommeln mit exzentrischer Federanordnung begrenzt.

## Patentansprüche

1. Kabeltrommel zur selbsttätigen Aufwicklung eines Kabels, mit einem inneren Trommelteil (2), einen äußeren Trommelteil (1) und einer Rückenplatte (3), **dadurch gekennzeichnet, dass** an dem inneren Trommelteil (2) eine hohlzylindrische Kulisse (23) angeformt ist, in deren Innenwandung wenigstens eine Einwölbung (24) eingebracht ist, wobei an der Rückenplatte (3) ein Bremshebel (6) radial verschiebbar gelagert ist, der wenigstens ein Langloch (63) aufweist, in dem die Achse (71) eines Bremsrades (7) geführt ist, das in die Kulisse (23) hineinragt und an deren Innenwandung anliegt, wobei das wenigstens eine Langloch (63) derart winklig positioniert ist, dass das Bremsrad (7) bei Rotation der Kulisse (23) in Aufwickelrichtung der Kabeltrommel gegen die Innenwandung der Kulisse (23) gepresst wird und wobei an dem Bremshebel (6) ein Blockierelement dem Bremsrad (7) in Aufwickelrichtung der Kabeltrommel nachgelagert angeordnet ist, das derart mit wenigstens einem an dem inneren Trommelteil (2) angeordneten Fangteil zusammenwirkt, dass dieses nur bei Passieren des Fangteils in Aufwickelrichtung der Kabeltrommel blockiert wird.

2. Kabeltrommel nach Anspruch 1, **dadurch gekennzeichnet, dass** die Einwölbung (24) einen rechteckförmigen Querschnitt aufweist.

3. Kabeltrommel nach Anspruch 1, **dadurch gekennzeichnet, dass** die Einwölbung (24) einen zumindest bereichsweise sägezahnförmigen Querschnitt aufweist.

4. Kabeltrommel nach einem der vorgenannten Ansprüche, **dadurch gekennzeichnet, dass** das Blockierelement durch eine endseitig am dem Bremshebel (6) angeordnete Abkantung (65) gebildet ist, wobei das wenigstens eine Fangteil durch einen an einem konzentrisch zur Kulisse (23) an dem inneren Trommelteil (2) angeordneten ringförmigen Steg (25) angeformten Keil (26) gebildet ist.

5. Kabeltrommel nach Anspruch 4, **dadurch gekennzeichnet, dass** die Abkantung (65) endseitig mit einem Anschlagteil (66) versehen ist, das an seiner dem ringförmigen Steg (25) zugewandten Außenseite winklig ausgebildet ist.

6. Kabeltrommel nach Anspruch 5, **dadurch gekennzeichnet, dass** das Anschlagteil (66) einen trapezförmigen Querschnitt aufweist.

7. Kabeltrommel nach einem der Ansprüche 4 bis 6, **dadurch gekennzeichnet, dass** ein Bedienhebel (68) angeordnet ist, über den die Abkantung (65) in Richtung der Mittelachse der Kulisse (23) biegbar ist.

8. Kabeltrommel nach Anspruch 2, **dadurch gekennzeichnet, dass** das Blockierelement durch einen keilförmig ausgebildeten Schieber (8) gebildet ist, der eine radiale Anschlagfläche (81) und eine zu dieser Anschlagfläche in einem spitzen Winkel angestellte Gleitfläche (82) aufweist und der an dem Bremshebel (6') verschiebbar gelagert und über eine Feder (83) gegen die Innenwandung der Kulisse (23) vorgespannt ist, wobei die wenigstens eine Einwölbung (24) der Kulisse (23) zugleich ein Fangteil bildet, an deren Seitenwand die Anschlagfläche (81) bei Passieren der Einwölbung (24) in Aufwickelrichtung der Kabeltrommel anschlägt.

9. Kabeltrommel nach Anspruch 8, **dadurch gekennzeichnet, dass** der Schieber (8) mit einem Bedienhebel verbunden ist, über den er entgegen der Federspannung der Feder (83) verschiebbar ist.

10. Kabeltrommel nach einem der vorgenannten Ansprüche, **dadurch gekennzeichnet, dass** in dem Bremshebel (6, 6') zwei Langlöcher (63) zur Aufnahme einer Achse (71) eines Bremsrades (7) eingebracht sind, die zueinander zur in Bezug auf die Kulisse (23) radialen Mittelachse symmetrisch ausgebildet sind.

11. Kabeltrommel nach einem der vorgenannten Ansprüche, **dadurch gekennzeichnet, dass** der Bremshebel (6, 6') wenigstens ein Rastelement (67) aufweist, über das er mit der Rückenplatte (3) verrastbar ist.

12. Kabeltrommel nach einem der vorgenannten Ansprüche, **dadurch gekennzeichnet, dass** die Rückenplatte (3) eine hohlzylindrisch ausgebildetes Mittelteil (33) aufweist, das den Bremshebel (6, 6') aufnimmt und das in die Kulisse (23) hineinragt, wobei seitlich in die Wandung des Mittelteils (33) eine Aussparung (34) zum Durchtritt des Bremsrades (7) eingebracht ist.

## Claims

1. Cable reel for automatic winding of a cable, with an inner drum section (2), an outer drum section (1) and a backing plate (3), **characterised in that** on the inner drum section (2) a hollow cylindrical sliding guide (23) is formed, whose inner wall has at least one indentation (24), where a brake lever (6) is mounted to move radially on the backing plate (3), which brake lever (6) has at least one slot (63) in which the axle (71) of a braking wheel (7) is guided, which projects into the sliding guide (23) and lies against its inner wall, where the slot (63) or slots are positioned at an angle in such a way that the brake wheel (7) is pressed against the inner wall of the sliding guide (23) when the sliding guide (23) is rotated in the winding direction of the cable reel, and where a blocking element is arranged on the brake lever (6) after the brake wheel (7) in the winding direction of the cable reel, which blocking element interacts with at least one catch element arranged on the inner drum section (2) in such a way that the blocking element is blocked only when the catch element passes in the winding direction of the cable reel.

2. Cable reel in accordance with claim 1, **characterised in that** the indentation (24) has a rectangular cross section.

3. Cable reel in accordance with claim 1, **characterised in that** the indentation (24) has, at least in parts, a serrated cross section.

4. Cable reel in accordance with any of the above claims, **characterised in that** the blocking element (6) is formed by a bevelled edge (65) arranged on the end of the brake lever (6), where the catch element or catch elements are formed by a wedge (26) formed on a ring-shaped ridge (25) arranged concentrically to the sliding guide (23) on the inner drum section (2).

5. Cable reel in accordance with claim 4, **characterised in that** the end of the bevelled edge (65) is fitted with a stop (66) which is shaped as an angle on its outer side facing the ring-shaped ridge (25).

6. Cable reel in accordance with claim 5, **characterised in that** the stop has a trapezoid cross section.

7. Cable reel in accordance with any of the claims 4 to 6, **characterised in that** an operating lever (68) is provided, by means of which the bevelled edge (65) can be bent towards the centre axis of the sliding guide (23).

8. Cable reel in accordance with claim 2, **characterised in that** the blocking element is formed by a wedge-shaped slide (8), which has a radial contact surface (81) and a sliding surface (82) set at an acute angle to this contact surface (81), which is mounted to move on the brake lever (6') and is tensioned by a spring (83) against the inner wall of the sliding guide (23), where the indentation or indentations (24) on the sliding guide (23) also form a catch element, whose side walls are contacted by the stop surface (81) when the indentation (24) passes in the winding direction of the cable reel.

9. Cable reel in accordance with claim 8, **characterised in that** the slide (8) is connected to an operating lever by means of which it can be moved against the force of the spring (83).

10. Cable reel in accordance with any of the aforementioned claims, **characterised in that** the brake lever (6, 6') has two slots (63) to receive the axle (71) of a braking wheel (7) which are formed symmetrically to one another in relation to the radial centre axis with reference to the sliding guide (23).

11. Cable reel in accordance with any of the aforementioned claims, **characterised in that** the brake lever (6, 6') has at least one engaging element (67) by means of which it can engage with the backing plate (3).

12. Cable reel in accordance with any of the aforementioned claims, **characterised in that** the backing plate (3) has a hollow cylindrical central part (33) which receives the brake lever (6, 6') and which projects into the sliding guide (23), where an opening (34) is provided at the side of the central part (33) to allow the braking wheel (7) to pass through.

## Revendications

1. Tambour destiné à l'enroulement automatique d'un câble, comprenant une partie intérieure (2) de tambour, une partie extérieure (1) de tambour et une plaque dorsale (3), **caractérisé en ce que** contre la partie intérieure (2) du tambour a été moulée une coulisse (23) cylindrique creuse dans la paroi intérieure de laquelle a été ménagée au moins une cavité (24), sachant qu'en appui radial coulissant contre la plaque dorsale (3) se trouve un levier de frein (6) qui présente au moins un trou oblong (63) dans lequel est guidé l'axe (71) d'une roue de freinage (7) qui fait saillie dans la coulisse (23) et applique contre sa paroi intérieure, sachant qu'au moins ce trou oblong (63) est positionné selon un angle tel que, lorsque la coulisse (23) tourne, la roue de freinage (7) est pressée contre la paroi intérieure de la coulisse (23) dans le sens d'enroulement du tambour à câble, et sachant que sur le levier de freinage (6) est agencé un élément de blocage en appui en aval de la roue de freinage (7) observé dans le sens d'enroulement du tambour à câble, élément qui interagit avec au moins une pièce interceptrice agencée contre la partie intérieure (2) du tambour de sorte à être bloqué seulement en cas de franchissement de la pièce interceptrice dans le sens d'enroulement du tambour à câble.

2. Tambour à câble selon la revendication 1, **caractérisé en ce que** la cavité (24) présente une section rectangulaire.

3. Tambour à câble selon la revendication 1, **caractérisé en ce que** la cavité (24) présente au moins localement une section en dent de scie.

4. Tambour à câble selon l'une des revendications précédentes, **caractérisé en ce que** l'élément de blocage est formé par un bord coudé (65) agencé à l'extrémité contre le levier de freinage (6), sachant qu'au moins une pièce interceptrice est formée par une cale (26) moulée contre une nervure annulaire (25) agencée concentriquement à la coulisse (23) contre la pièce intérieure (2) de tambour.

5. Tambour à câble selon la revendication 4, **caractérisé en ce que** le bord coudé (65) est doté en son extrémité d'une pièce butée (66) configurée en angle au niveau de son côté extérieur regardant la nervure annulaire (25).

6. Tambour à câble selon la revendication 5, caractérisé en que la pièce butée (66) présente une section trapézoïdale.

7. Tambour à câble selon l'une des revendications 4 à 6, **caractérisé en ce qu'**est agencé un levier de commande (68) via lequel il est possible d'incurver le bord coudé (65) en direction de l'axe médian de la coulisse (23).

8. Tambour à câble selon la revendication 2, **caractérisé en ce que** l'élément de blocage est formé par un curseur (8) configuré en forme de cale, curseur qui présente une surface butée (81) radiale et une surface de glissement (82) formant un angle aigu avec cette surface butée, et qui se trouve en appui coulissant contre le levier de freinage (6'), et qui est précontraint via un ressort (83) contre la paroi intérieure de la coulisse (23), sachant qu'au moins une cavité (24) de la coulisse (23) forme en même temps une pièce interceptrice contre la paroi latérale de laquelle vient buter la surface butée (81) au moment de franchir la cavité (24) dans le sens d'enroulement du tambour à câble.

9. Tambour à câble selon la revendication 8, **caractérisé en ce que** le curseur (8) est relié à un levier de commande via lequel il est possible de le déplacer en vainquant la tension du ressort (83).

10. Tambour à câble selon l'une des revendications précédentes, **caractérisé en ce que** dans le levier de freinage (6, 6') ont été ménagés deux trous oblongs (63) pour recevoir l'axe (71) d'une roue de freinage (7), trous qui sont configurés réciproquement symétriques par rapport à l'axe médian radial relativement à la coulisse (23).

11. Tambour à câble selon l'une des revendications précédentes, **caractérisé en ce que** le levier de freinage (6, 6') présente au moins un élément de crantage (67) via lequel il est possible de le faire encranter avec la plaque dorsale (3).

12. Tambour à câble selon l'une revendications précédentes, **caractérisé en ce que** la plaque dorsale (3) présente une pièce médiane (33) configurée cylindrique creuse, pièce qui reçoit le levier de freinage (6, 6') et qui fait saillie dans la coulisse (23), sachant que latéralement, dans la paroi de la pièce médiane (33), a été ménagé un évidement (34) permettant le passage de la roue de freinage (7).
